# FASCICULE DE BREVET EUROPEEN

(11) **EP 3 312 062 B1**
(45) Date de publication et mention de la délivrance du brevet: **25.03.2020**
(21) Numéro de dépôt: 17196316.8
(22) Date de dépôt: 13.10.2017
(51) Int. Cl.: B60S 1/38, B60S 1/52

(54) **MODULE DE CONNEXION POUR UN DISPOSITIF D ESSUYAGE D'UN VEHICULE AUTOMOBILE**
ANSCHLUSSMODUL FÜR EINE WISCHVORRICHTUNG EINES KRAFTFAHRZEUGS
CONNECTION MODULE FOR A WIPER DEVICE OF A MOTOR VEHICLE

(30) Priorité: 20.10.2016 FR 1660164
(43) Date de publication de la demande: 25.04.2018
(73) Titulaire: Valeo Systèmes d'Essuyage, 78322 Le Mesnil Saint Denis (FR)
(72) Inventeur: JARASSON, Jean-Michel, 78322 LE MESNIL SAINT DENIS (FR); IZABEL, Vincent, 78322 LE MESNIL SAINT DENIS (FR); CAILLOT, Gérald, 78322 LE MESNIL SAINT DENIS (FR); VUILLARDOT, Thomas, 78322 LE MESNIL SAINT DENIS (FR)
(74) Mandataire: Valeo Systèmes d'Essuyage

(56) Documents cités:
- EP-A1- 2 460 700
- DE-A1-102010 052 309
- DE-A1-102010 052 314

## Description

### DOMAINE TECHNIQUE DE L'INVENTION

L'invention relève du domaine technique des équipements pour véhicule automobile et en particulier des équipements pour l'essuyage de vitres du véhicule automobile. Plus particulièrement, l'invention concerne un module de connexion pour dispositif d'essuyage d'un véhicule automobile.

### ARRIERE-PLAN TECHNIQUE DE L'INVENTION

Un module de connexion est un module agencé à une jonction entre un bras d'entraînement et un balai d'essuie-glace appartenant à un dispositif d'essuyage.

Un module de connexion permet d'opérer un raccordement hydraulique et un raccordement électrique entre le bras d'entraînement et le balai d'essuie-glace. A cet effet, le module de connexion peut comprendre un connecteur électrique et un connecteur hydraulique. Les connecteurs électrique et hydraulique comprennent des voies d'acheminement. Le connecteur électrique comprend généralement deux voies d'acheminement de courant électrique, qui sont des câbles ou fils électriques. En fonction de la nature du dispositif d'essuyage, le connecteur hydraulique comprend une ou deux voies d'acheminement, qui sont par exemple des tuyaux.

Selon une conception connue d'un tel module de connexion, tel que par exemple illustrée dans le document EP2460700 B1 ou encore le document DE 10 2010 052314 A1, le connecteur hydraulique et le connecteur électrique sont agencés l'un au-dessus de l'autre dans un espace intérieur du module de connexion de sorte que les voies hydrauliques s'étendent sensiblement au-dessus des voies électriques ou inversement.

Ce type de modules de connexion, avec cet agencement, présente l'inconvénient de s'étendre de façon importante en hauteur, la hauteur étant mesurée sensiblement selon une normale à la surface extérieure du pare-brise passant par le module de connexion lorsque le dispositif d'essuyage est assemblé au véhicule automobile. Une conséquence notable de cet agencement est une obstruction de la visibilité d'un conducteur du véhicule automobile. Une autre conséquence est la diminution de la performance aérodynamique du balai d'essuie-glace par dégradation de la portance et de la traînée due à la hauteur du module de connexion.

Il existe un besoin de réduire l'encombrement créé par les connecteurs hydraulique et électrique notamment afin d'améliorer la visibilité des conducteurs.

### BREF RESUME DE L'INVENTION

Pour ce faire, l'invention propose un module de connexion pour un dispositif d'essuyage d'une surface extérieure d'une vitre d'un véhicule automobile destiné à être agencé entre un balai d'essuie-glace et un bras d'entrainement, le module de connexion comprenant un connecteur hydraulique et un connecteur électrique, le connecteur électrique, dit premier connecteur, comprenant un corps isolant percé de deux conduits longitudinaux et deux broches mâles, chacun des deux conduits longitudinaux du connecteur électrique et la broche mâle qui le prolonge, forment ensemble une voie longitudinale d'acheminement du connecteur électrique, le connecteur hydraulique, dit deuxième connecteur, comprenant deux voies longitudinales d'acheminement hydrauliques, le module de connexion étant caractérisé en ce que le premier connecteur est au moins partiellement agencé latéralement entre les deux voies longitudinales d'acheminement du deuxième connecteur, et en ce que les voies longitudinales d'acheminement électriques et hydrauliques des premier et deuxième connecteurs s'étendent chacune longitudinalement selon un axe principal d'extension.

Cet agencement des voies longitudinales d'acheminement des connecteurs hydraulique et électrique permet notamment de diminuer la hauteur du module de connexion et donc la partie du module de connexion visible par le conducteur du véhicule automobile.

L'invention a également pour objet un balai d'essuie-glace constitué d'une lame d'essuyage et d'une armature caractérisé en ce qu'il comprend un module de connexion comme défini ci-dessus.

Selon différents aspects de l'invention qui pourront être pris ensemble ou séparément :
- les voies longitudinales d'acheminement du premier connecteur sont au moins partiellement agencées latéralement entre les deux voies longitudinales d'acheminement du deuxième connecteur,
- les deux voies longitudinales d'acheminement du deuxième connecteur s'étendent sensiblement parallèlement l'une à l'autre,
- les voies longitudinales d'acheminement du premier connecteur sont entièrement agencées latéralement entre les deux voies longitudinales d'acheminement du deuxième connecteur,
- les deux voies longitudinales d'acheminement du premier connecteur sont parallèles l'une à l'autre,
- l'axe principal d'extension de chacune des voies longitudinales d'acheminement du premier connecteur est, sur au moins une partie de sa longueur, confondu ou sensiblement confondu avec un plan P1,
- les axes principaux d'extension (X₁, X2) des voies longitudinales d'acheminement du deuxième connecteur sont, au moins sur une partie de leurs longueurs, confondus ou sensiblement confondus avec un plan P2,
- les plans P₁ et P₂ sont orthogonaux ou sensiblement orthogonaux,
- les plans P₁ et P₂ sont parallèles ou sensiblement parallèles,
- les plans P₁ et P₂ sont confondus ou sensiblement confondus,
- les plans P₁ et P₂ sont sécants.

### BREVE DESCRIPTION DES FIGURES

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif, en référence aux figures annexées parmi lesquelles :
- La figure 1 est une vue schématique d'un pare-brise de véhicule automobile muni d'un dispositif d'essuyage à deux essuie-glace dont l'un au moins est muni d'un module de connexion selon l'invention.
- La figure 2 est une vue en section transversale d'un balai d'essuie-glace du dispositif d'essuyage de la figure 1.
- La figure 3 est une vue en perspective d'une partie du dispositif d'essuyage illustré aux figures précédentes et comprenant un module de connexion selon un premier mode de réalisation de l'invention.
- La figure 4 est une vue en perspective de la partie du dispositif d'essuyage illustré à la figure précédente et représenté sans le bras d'entraînement.
- La figure 5 est une vue en perspective de la partie du dispositif d'essuyage illustré à la figure précédente et représenté sans l'adaptateur.
- La figure 6 est une vue en perspective de la partie du dispositif d'essuyage illustré à la figure précédente et représenté sans l'armature du module de connexion.
- La figure 7 est une vue en perspective de la partie du dispositif d'essuyage illustré à la figure précédente et représenté sans le connecteur mécanique.
- La figure 8 est une vue en section transversale d'un module de connexion selon un deuxième mode de réalisation de l'invention, le module de connexion étant représenté monté sur le balai d'essuie-glace.
- La figure 9 est une vue en perspective d'un module de connexion selon un troisième mode de réalisation de l'invention, le module de connexion étant représenté monté sur le balai d'essuie-glace.
- La figure 10 est une vue en perspective du module de connexion de la figure 9 représenté monté sur le balai d'essuie-glace.
- La figure 11 est une vue en section transversale du module de connexion de la figure 10, le module de connexion étant représenté monté sur le balai d'essuie-glace.
- La figure 12 est une vue en section transversale d'un module de connexion selon un quatrième mode de réalisation conforme à l'invention, le module de connexion étant représenté monté sur le balai d'essuie-glace.
- La figure 13 est une vue en section transversale d'un module de connexion selon un cinquième mode de réalisation conforme à l'invention, le module de connexion étant représenté monté sur le balai d'essuie-glace.

A titre illustratif, non limitatif et sans référence à la gravité terrestre, on utilisera, dans la suite de la description, trois axes L, V et T en référence au trièdre L, V, T représenté sur les figures.

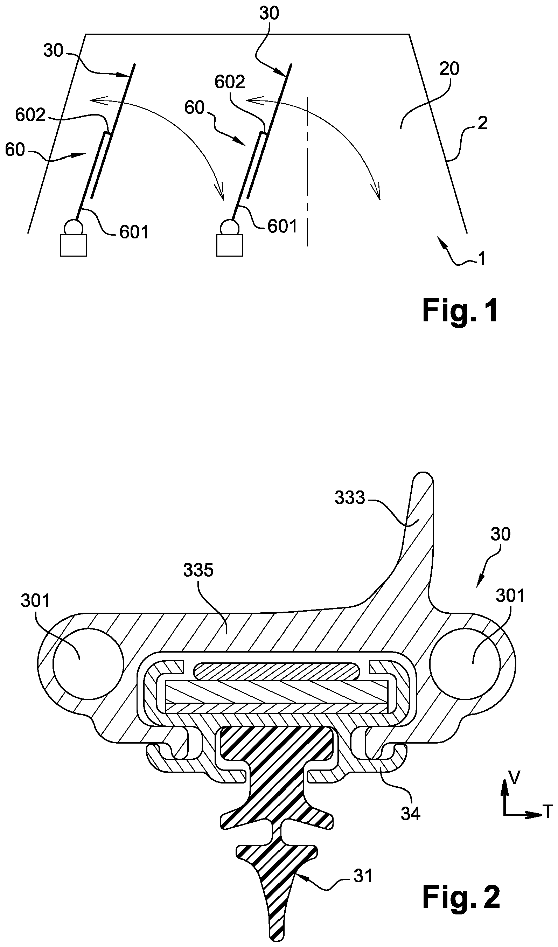

Comme illustré à la figure 1, l'invention concerne un système d'essuyage 1 pour un véhicule automobile. Le système d'essuyage 1 comprend ici deux essuie-glace dont chacun comporte un bras d'entraînement 60 et un balai d'essuie-glace 30. Le système d'essuyage 1 est conçu de manière à nettoyer la surface extérieure 20 du pare-brise 2 du véhicule automobile. En variante, la vitre 2 du véhicule automobile peut être par exemple une vitre arrière du véhicule automobile équipée d'au moins un essuie-glace.

Le bras d'entraînement 60 comprend ici une première extrémité longitudinale 601, dite extrémité proximale, et une deuxième extrémité longitudinale 602, dite extrémité distale. Le bras d'entraînement 60 s'étend longitudinalement selon une direction principale d'extension longitudinale de son extrémité proximale 601 à son extrémité distale 602.

Comme illustré à la figure 2, le balai d'essuie-glace 30 comprend une première extrémité longitudinale et une deuxième extrémité longitudinale. Il s'étend longitudinalement selon une direction principale d'extension longitudinale de la première extrémité longitudinale à la deuxième extrémité longitudinale. On note que la direction principale d'extension longitudinale du balai d'essuie-glace est parallèle à l'axe L.

Le balai d'essuie-glace 30 comprend une partie supérieure et une partie inférieure, assemblées l'une à l'autre. Les parties supérieure et inférieure s'étendent toutes deux longitudinalement selon la direction principale d'extension longitudinale du balai d'essuie-glace 30.

Le balai d'essuie-glace est représenté avec une seule vertèbre de renfort. En variante il peut comporter deux vertèbres de renfort.

La partie inférieure du balai d'essuie-glace 30 comprend ici une lame d'essuyage 31 et une armature 34. L'armature 34 sert notamment de logement à la lame d'essuyage 31.

La lame d'essuyage 31 est conçue pour être en contact avec la surface extérieure 20 de la vitre 2 de manière à essuyer celle-ci lors d'un mouvement de va-et-vient du balai d'essuie-glace 30 le long de la vitre 2.

La partie supérieure est ici composée d'un déflecteur aérodynamique 333, d'une partie de recouvrement 335 et deux conduits de distribution 301.

La partie de recouvrement 335 s'étend longitudinalement d'une extrémité longitudinale à l'autre du balai d'essuie-glace 30. Elle est agencée au-dessus de l'armature 34 du balai d'essuie-glace 30 de manière à recouvrir au moins une partie de celle-ci.

Le déflecteur aérodynamique 333 est conçu de manière à maintenir le balai d'essuie-glace 30 contre la surface extérieure 20 de la vitre 2 lorsque le véhicule automobile se déplace à une vitesse élevée. Le déflecteur aérodynamique 333 consiste en un bord relevé de la partie supérieure du balai d'essuie-glace 30. Il est ici issu de la partie de recouvrement 335.

Les conduits de distribution 301 du balai d'essuie-glace 30 sont conçus pour permettre la circulation et la distribution sur la vitre 2 d'un liquide, notamment un liquide de nettoyage de la vitre 20. Le liquide de nettoyage est par exemple stocké dans un réservoir situé dans un compartiment moteur du véhicule automobile. Le réservoir peut comprendre une pompe qui permet alors d'acheminer le liquide de nettoyage depuis le réservoir jusqu'au balai d'essuie-glace 30 en passant notamment par le bras d'entraînement 60.

Les conduits de distribution 301 s'étendent chacun longitudinalement selon une direction principale d'extension longitudinale parallèle à la direction d'extension longitudinale du bras d'essuie-glace 30. Lorsque les conduits de distribution 301 sont assemblés au reste du dispositif d'essuyage, on note que leurs directions principales d'extension longitudinale sont parallèles à l'axe L. Les conduits de distribution 301 permettent ici une distribution du liquide de nettoyage de part et d'autre du balai d'essuie-glace 30. Cela peut permettre notamment d'adapter la distribution de liquide de nettoyage sur la vitre 2 en fonction du sens de déplacement du balai d'essuie-glace 30.

Les conduits de distribution 301 sont reliés l'un à l'autre par la partie de recouvrement 335 qui recouvre l'armature 34 du balai d'essuie-glace 30. La partie de recouvrement 335 fait ainsi fonction de pont de matière entre les deux conduits de distribution 301. On note en outre que la partie de recouvrement 335, le déflecteur aérodynamique 333 et les deux conduits de distribution 301 sont par exemple extrudés. Plus précisément, on utilise deux matériaux co-extrudés : un matériau supérieur souple et un matériau plus rigide pour la forme de blocage sur l'armature 34.

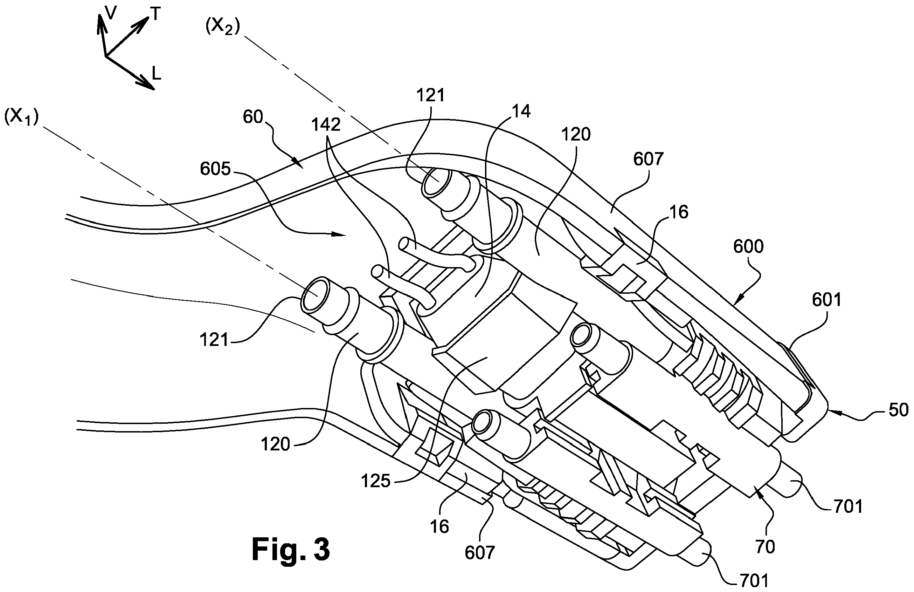

Comme illustré à la figure 3, le dispositif d'essuyage 1 comprend un module de connexion 10.

Le module de connexion 10 comprend ici un connecteur hydraulique 12 et un connecteur électrique 14. Le module de connexion 10 est destiné pour être agencé au niveau d'une jonction entre le bras d'entraînement 60 et le balai d'essuie-glace 30. Le module de connexion 10 permet une connexion électrique et une connexion hydraulique entre le bras d'entraînement 60 et le balai d'essuie-glace 30.

Le connecteur hydraulique 12 est conçu pour permettre une connexion hydraulique entre le bras d'entraînement 60 et le balai d'essuie-glace 30. En particulier, le connecteur hydraulique 12 permet notamment la circulation du liquide de nettoyage depuis le bras d'entraînement 60 jusqu'aux conduits de distribution 301 du balai d'essuie-glace 30.

Le connecteur hydraulique 12 comprend au moins une voie longitudinale d'acheminement 120, ici deux voies longitudinales d'acheminement 120. Les voies longitudinales d'acheminement 120 du connecteur hydraulique 12 sont ici des conduits d'acheminement 120 au travers desquels circule le liquide de nettoyage. Les conduits d'acheminement 120 sont des conduits en plastique rigides sur lesquels se connectent des tuyaux au niveau de la zone d'entrée 121.

Le connecteur électrique 14 est lui conçu pour permettre la transmission d'un courant électrique entre des fils électriques 142 issus du bras d'entraînement 60 et un dispositif nécessitant une alimentation électrique tel par exemple un film résistif, non illustré ici, du balai d'essuie-glace 30.

Comme illustré aux figures 3 à 7, le dispositif d'essuyage 1 comprend de plus un connecteur mécanique 70 et un adaptateur 50.

Le connecteur mécanique 70 et l'adaptateur 50 sont tous deux conçus pour permettre l'entraînement du balai d'essuie-glace 30 par le bras d'entraînement 60. En particulier, le connecteur mécanique 70 et l'adaptateur 50 sont conçus pour permettre un emboitement du balai d'essuie-glace 30 avec le bras d'entraînement 60.

Comme cela est visible en particulier à la figure 3, le bras d'entraînement 60 comprend au niveau de son extrémité distale 602 une chape de connexion 600. Autrement dit, le bras d'entraînement 60 se termine au niveau de son extrémité distale 602 par la chape de connexion 600. La chape de connexion 600 est conçue pour permettre l'emboitement du bras d'entraînement 60 avec le balai d'essuie-glace 30. Une fois assemblée au reste du dispositif d'essuyage 1, la chape de connexion 600 recouvre le module de connexion 10, le connecteur mécanique 70, l'adaptateur 50 et une partie du balai d'essuie-glace 30.

La chape de connexion 600 s'étend longitudinalement selon la direction principale d'extension longitudinale du bras d'entraînement 60. On note que la chape de connexion 600 présente ici une section transversale, la section transversale étant notamment orthogonale à la direction principale d'extension longitudinale du bras d'entraînement 60, sensiblement en forme de U.

En particulier, la chape de connexion 600 comprend une partie plane 605 et deux branches latérales 607, chaque branche latérale 607 s'étendant sensiblement perpendiculairement à partir de la partie plane 605. On note que la section transversale de chacune des branches latérales 607 de la chape de connexion 600 correspond à l'une des branches du U que forme la section transversale de la chape de connexion 600.

On note que chaque branche latérale 607 de la chape de connexion 600 est munie d'une zone dépourvue de matière destinée à permettre une coopération mécanique avec le module de connexion 10.

L'adaptateur 50 est conçu pour être inséré puis logé au moins partiellement à l'intérieur de la chape de connexion 600 du bras d'entraînement 60. En particulier ici, l'adaptateur 50, une fois assemblé au bras d'entraînement 60 est conçu pour être agencé entre les deux branches latérales 607 de la chape de connexion 600.

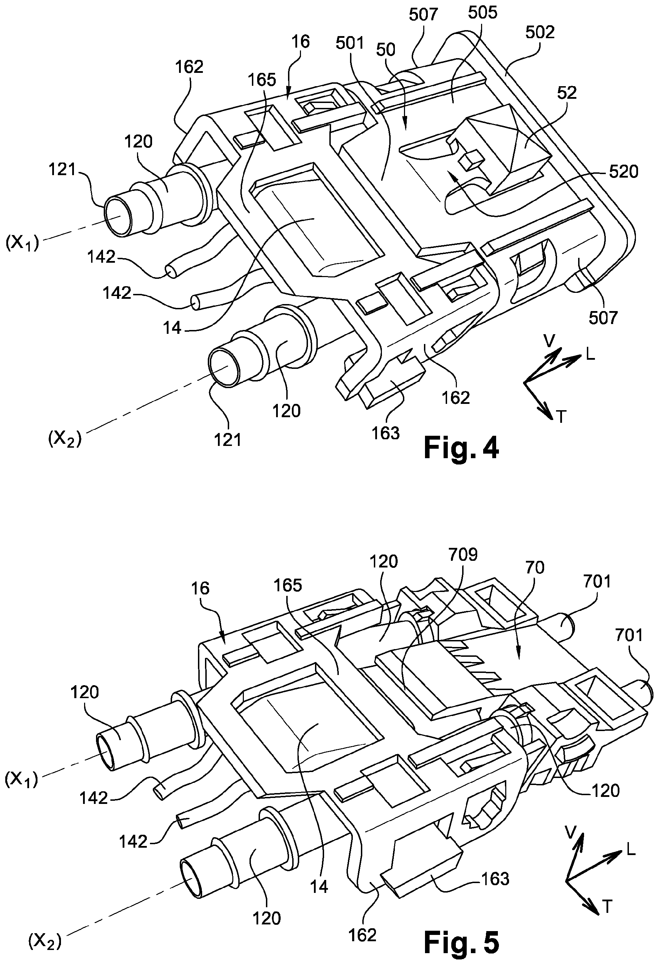

Comme cela est visible à la figure 4, l'adaptateur 50 comprend une première extrémité longitudinale 501 et une deuxième extrémité longitudinale 502 et s'étend longitudinalement de l'une à l'autre selon une direction principale d'extension longitudinale. Lorsque l'adaptateur 50 est assemblé au reste du dispositif d'essuyage, la direction principale d'extension longitudinale de l'adaptateur 50 est parallèle à l'axe L. L'adaptateur 50 présente une section transversale sensiblement en forme de U. Il comprend deux parois latérales 507 et une partie plane 505 qui relie l'une à l'autre les deux parois latérales 507 de l'adaptateur. Les deux parois latérales 507 s'étendent ici de manière orthogonale à ladite partie plane 505. Autrement dit, la partie plane 505 de l'adaptateur 50 fait fonction de pont de matière entre les deux parois latérales 507 de l'adaptateur 50.

L'adaptateur 50 est conçu pour être agencé au-dessus du connecteur mécanique 70, entre ce dernier et la chape de connexion 600 du bras d'entraînement 60. On note que la chape de connexion 600 fait ici fonction de logement à l'adaptateur 50 lequel recouvre le connecteur mécanique 70. En particulier, l'adaptateur 50 est conçu de manière à coopérer mécaniquement à la fois avec le connecteur mécanique 70 et avec la chape de connexion 600 du bras d'entraînement 30.

On note que l'adaptateur 50 est muni sur sa partie plane 505 d'une lamelle flexible 520 à l'extrémité libre de laquelle est agencé un bouton de blocage 52.

Le bouton de blocage 52 est conçu pour coopérer mécaniquement avec un orifice, non représenté sur les figures, de la chape de connexion 600 du bras d'entraînement 60. Le bouton de blocage 52, dit aussi orifice de blocage 52, permet le maintien en position de l'adaptateur 50 relativement à la chape de connexion 600 du bras d'entraînement 60. On note que le bouton de blocage 52 et les branches latérales 507 de l'adaptateur 50 font saillie dans des directions de saillie orthogonales l'une à l'autre.

L'adaptateur 50 est conçu pour être solidarisé au connecteur mécanique 70 du balai d'essuie-glace 30. On note qu'une fois solidarisé au connecteur mécanique 70, l'adaptateur 50 recouvre en partie celui-ci. En particulier ici, une fois assemblé à l'adaptateur 50, le connecteur mécanique 70 est agencé entre les deux parois latérales 507 de l'adaptateur 50.

Le connecteur mécanique 70 est conçu pour être assemblé et solidarisé de manière définitive au balai d'essuie-glace 30. En particulier, le connecteur mécanique 70 est conçu pour être notamment solidarisé sur la vertèbre de renfort qui est insérée dans l'armature 34 du balai d'essuie-glace 30 Une fois assemblé au balai d'essuie-glace 30, le connecteur mécanique 70 s'étend longitudinalement dans une direction principale d'extension longitudinale sensiblement confondue avec la direction principale d'extension longitudinale du balai d'essuie-glace 30. Autrement dit, une fois assemblé au reste du dispositif d'essuyage, le connecteur mécanique 70 s'étend longitudinalement selon une direction parallèle à l'axe L.

Comme cela est illustré en particulier aux figures 4 et 5, le module de connexion 10 comprend en outre une armature 16. L'armature 16 du module de connexion 10 est conçue en particulier pour servir de logement et/ou de support au connecteur hydraulique 12. Plus largement, elle est par exemple conçue pour coopérer mécaniquement à la fois avec le connecteur hydraulique 12, la chape de connexion 600 du bras d'entraînement 60 et le connecteur mécanique 70.

On note qu'une fois assemblés au reste du dispositif d'essuyage 1, le connecteur mécanique 70 et le module de connexion 10 sont agencés sensiblement l'un derrière l'autre le long de la direction principale d'extension longitudinale du balai d'essuie-glace 30. Autrement dit, le connecteur mécanique 70 et le module de connexion 10 sont conçus pour être agencés sensiblement l'un derrière l'autre selon une direction parallèle à l'axe L.

L'armature 16 est conçue pour être agencée et fixée à l'intérieur de la chape de connexion 600 du bras d'entraînement 60. On note que l'armature 16 comprend ici un pont de matière 165 et deux parois latérales 162 reliées l'une à l'autre par le pont de matière 165. Les parois latérales 162 de l'armature 16 s'étendent de manière sensiblement orthogonale au pont de matière 165 et à partir de celui-ci. On note encore qu'une fois assemblée au reste du dispositif d'essuyage 1 et observée selon la direction principale d'extension longitudinale du balai d'essuie-glace, l'armature 16 présente sensiblement une forme en U.

Comme cela est visible en particulier aux figures 4 et 5, les parois latérales 162 de l'armature 16 sont munies chacune d'une excroissance 163 qui fait saillie vers l'extérieur du U formé par l'armature 16. Autrement dit, les deux excroissances 163 font saillie latéralement et vers l'extérieur à partir des parois latérales 162 de l'armature 16. Les excroissances 163 du module de connexion sont prévues pour coopérer mécaniquement avec les zones dépourvues de matière des parois latérales 607 de la chape de connexion 600. Les excroissances 163 permettent en particulier le maintien en position de l'armature 16 par rapport au bras d'entraînement 60.

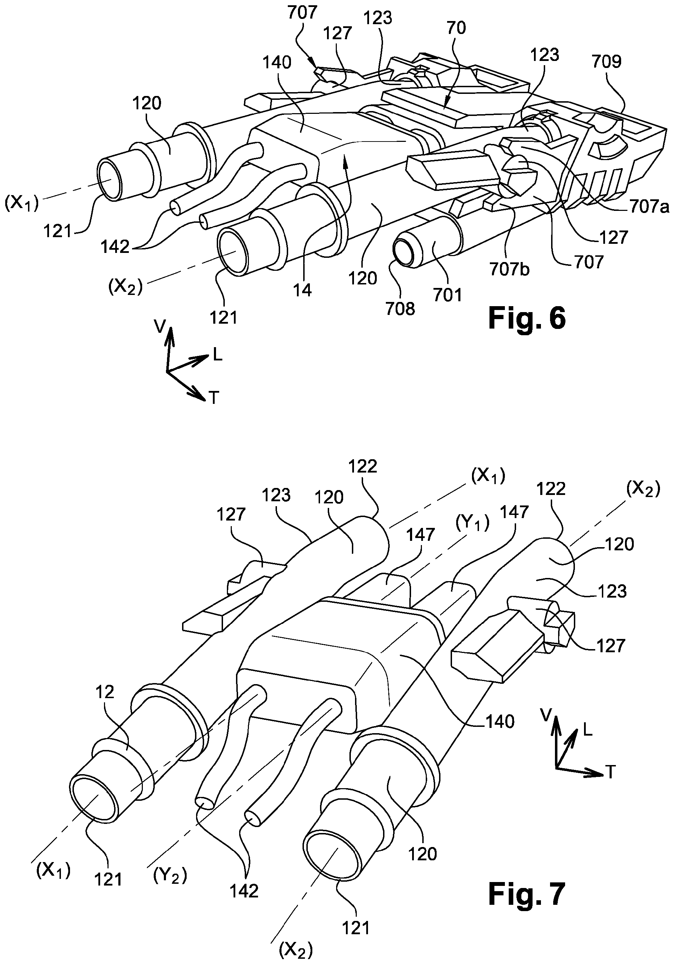

Comme cela est visible en particulier aux figures 5 et 6, le connecteur mécanique 70 s'étend longitudinalement selon une direction principale d'extension longitudinale du connecteur mécanique 70 entre une première extrémité longitudinale 708 et une deuxième extrémité longitudinale 709, de l'une à l'autre. On note que le connecteur mécanique 70 présente une forme générale extérieure sensiblement parallélépipédique. La direction principale d'extension longitudinale du connecteur mécanique 70 est parallèle à l'axe L lorsque le connecteur mécanique 70 est assemblé au reste du dispositif d'essuyage.

On note que l'armature 16 du module de connexion 10 et le connecteur mécanique 70 sont conçus de manière à être sensiblement positionnés l'un derrière l'autre le long de la direction principale d'extension longitudinale du balai d'essuie-glace 30. Autrement dit, l'armature 16 et le connecteur mécanique 70 sont conçus de manière à être sensiblement positionnés l'un derrière l'autre selon une direction parallèle à l'axe L.

Une fois le connecteur mécanique 70 assemblé au reste du dispositif d'essuyage, le connecteur mécanique 70 est conçu de sorte que sa direction principale d'extension longitudinale soit parallèle à la direction d'extension principale longitudinale du balai d'essuie-glace 30. Autrement dit, une fois le connecteur mécanique 70 assemblé au reste du dispositif d'essuyage, la direction principale d'extension longitudinale du connecteur mécanique 70 est parallèle à l'axe L.

Le connecteur mécanique 70 comprend deux conduits internes, non visibles sur les figures, et deux conduits externes 701.

Les conduits internes s'étendent ici parallèlement l'un à l'autre à l'intérieur du connecteur mécanique 70. Ils sont conçus pour être connectés d'une part aux conduits d'acheminement 120 du connecteur hydraulique 12 et d'autre part aux conduits externes 701 du connecteur mécanique 70 qui seront décrits par la suite.

On note que les conduits d'acheminement 120 du connecteur hydraulique 12 sont conçus pour s'emboiter et s'insérer sur au moins une partie de leurs longueurs à l'intérieur des conduits internes du connecteur mécanique 70.

Les conduits externes 701 s'étendent eux parallèlement à la direction d'extension longitudinale du connecteur mécanique 70. Ils s'étendent ici chacun de l'une des extrémités longitudinales 708, 709 à l'autre du connecteur mécanique 70. Ils sont conçus pour être connectés à la fois aux conduits de distribution 301 du balai d'essuie-glace 30 et aux conduits internes du connecteur mécanique 70. Lorsque le connecteur mécanique 70 est assemblé au reste du dispositif d'essuyage, les conduits externes 701 s'étendent parallèlement à l'axe L.

Ainsi, les conduits internes du connecteur mécanique 70 permettent de connecter les conduits d'acheminement 120 du connecteur hydraulique 12 aux conduits de distribution 301 du balai d'essuie-glace 30. En particulier, le liquide de nettoyage initialement stocké dans le réservoir du compartiment moteur circule successivement à travers un tuyau du bras d'entraînement 60, les conduits d'acheminement 120 du connecteur hydraulique 12, les conduits internes du connecteur mécanique 70, les conduits externes 701 du connecteur mécanique 70 et enfin à l'intérieur des conduits de distribution 301 du balai d'essuie-glace 30 avant d'être projeté sur la surface extérieure 20 de la vitre 2.

On note que les conduits de distribution 301 du balai d'essuie-glace 30 sont munis, sur au moins une partie de leurs longueurs, d'orifices de projection, non représentés sur les figures, à travers lesquels est distribué le liquide de nettoyage sur la vitre 2.

Le connecteur mécanique 70 comprend en outre une prise femelle, non visible sur les figures, qui permet une connexion électrique avec le connecteur électrique 14.

Comme cela est visible en particulier à la figure 7, le connecteur électrique 14 comprend un corps isolant 140 et deux broches mâles 147. Le corps isolant 140 est percé de deux conduits longitudinaux, non visibles. Chacun de ces conduits longitudinaux comprend un matériau conducteur électrique. De plus, chacun des deux conduits internes du conducteur électrique 14 est prolongé par l'une ou l'autre des deux broches mâles 147. Les deux broches mâles 147 sont conçues pour être branchées à la prise femelle du connecteur mécanique 70.

Chacun des deux conduits longitudinaux du connecteur électrique et la broche mâle 147 qui le prolonge forment ensemble une voie longitudinale d'acheminement du connecteur électrique 14. Le connecteur électrique 14 comprend ainsi deux voies longitudinales d'acheminement qui s'étendent ici parallèlement l'une à l'autre. Les voies longitudinales d'acheminement du connecteur électrique 14 s'étendent chacune selon un axe principal d'extension (Y₁, Y₂).

Comme illustré aux figures 6 et 7, le connecteur hydraulique 12 est notamment muni de deux tourillons 127. Les tourillons 127 sont conçus pour coopérer mécaniquement avec le connecteur mécanique 70. En particulier, les tourillons 127 font ici saillie latéralement depuis l'un et l'autre des conduits d'acheminement 120 du connecteur hydraulique 12. Les tourillons 127 s'étendent chacun suivant un axe principal sensiblement orthogonal aux directions principales d'extension longitudinale des conduits d'acheminement 120 du connecteur hydraulique 12.

Pour permettre la coopération mécanique entre le connecteur mécanique 70 et le connecteur hydraulique 12, le connecteur mécanique 70 comprend, lui, deux moyens de blocage conçus pour coopérer mécaniquement avec les tourillons 127 du connecteur hydraulique 120. Comme illustré en particulier à la figure 6, les moyens de blocage du connecteur mécanique 70 sont des bras 707 qui sont agencés de chaque côté du connecteur mécanique 70. Chaque bras 707 comprend lui-même deux branches longitudinales 707a et 707b. Les deux branches longitudinales 707a et 707b forment entre elles un interstice de forme sensiblement circulaire destiné à accueillir l'un ou l'autre des tourillons 127 du connecteur hydraulique 120. Autrement dit, les deux branches 707a et 707b sont conçues pour permettre le passage et l'insertion entre elles de l'un des tourillons 127 du connecteur hydraulique 120.

Comme illustré en particulier à la figure 7, chacun des conduits d'acheminement 120 du connecteur hydraulique 12 s'étend ici longitudinalement selon une direction principale d'extension longitudinale, dite axe principal d'extension (X₁, X₂), d'une première extrémité longitudinale, dite extrémité d'entrée 121, et à une deuxième extrémité longitudinale, dite extrémité de sortie 122. Les axes principaux d'extension (X₁, X₂) des deux conduits d'acheminement 120 sont ici parallèles ou sensiblement parallèles l'un à l'autre.

Chacun des conduits d'acheminement 120 présente une section transversale, la section transversale s'étendant perpendiculairement à l'axe principal d'extension (X₁, X₂) du conduit d'acheminement 120, qui est sensiblement circulaire.

D'une part, chacun des conduits d'acheminement 120 du connecteur hydraulique 12 est conçu pour être raccordé au niveau de son extrémité d'entrée 121 à un tuyau ou conduit, non représenté ici, du bras d'entraînement 60. D'autre part, au niveau de leur extrémité de sortie 122, les conduits d'acheminement 120 sont conçus pour être raccordés au connecteur mécanique 70. En particulier, les conduits d'acheminement 120 sont conçus pour être raccordés au niveau de leur extrémité de sortie 122 aux conduits internes du connecteur mécanique 70, l'étanchéité étant assurée par des joints entre les conduits 120 et le connecteur mécanique 70.

On note que chacun des conduits d'acheminement 120 du connecteur hydraulique 12 est parfois désigné par l'expression de langue anglaise « demi water plugs ».

Ici, les conduits d'acheminement 120 du connecteur hydraulique 12 sont tous deux coudés. Ici, par conséquent, les axes principaux d'extension (X₁, X₂) ne sont pas rectilignes. En particulier, chaque conduit d'acheminement 120 comprend une première portion rectiligne qui s'étend longitudinalement de l'extrémité d'entrée 121 à un coude 123 et une deuxième portion rectiligne qui s'étend longitudinalement du coude 123 à l'extrémité de sortie 122. Les première et deuxième portions rectilignes de chaque conduit d'acheminement 120 forment ainsi un angle non nul entre elles.

Cette conception des conduits d'acheminement 120 du connecteur hydraulique 12 permet notamment de faciliter la coopération mécanique entre le connecteur hydraulique 12 et le connecteur mécanique 70. Cette conception permet en outre de faciliter l'assemblage du module de connexion 10 au reste du dispositif d'essuyage.

Comme cela est illustré en particulier à la figure 3, le connecteur hydraulique 12 comprend ici un pont de matière 125. Le pont de matière 125 du connecteur hydraulique 12 s'étend ici entre les conduits d'acheminement 120 du connecteur hydraulique 12 de manière à les relier l'un à l'autre. En particulier, le pont de matière 125 est conçu pour solidariser les conduits d'acheminement 120 du connecteur hydraulique 12 l'un à l'autre. La solidarisation des conduits d'acheminement 120 permet notamment de faciliter leur insertion dans le connecteur mécanique 70. On note que le pont de matière 125 présente sensiblement la forme d'un U dont les deux branches s'écarteraient légèrement l'une de l'autre. En variante, le connecteur hydraulique 12 peut aussi être directement fixé (soudé) sur le connecteur électrique 14, le connecteur hydraulique 12 étant alors sans pont de matière 125.

En outre, le pont de matière 125 du connecteur hydraulique 12 fait ici fonction de logement et/ou de support pour le connecteur électrique 14. En particulier ici, le corps isolant 140 du connecteur électrique 14 repose au moins partiellement sur le pont de matière 125 du connecteur hydraulique 12.

Selon l'invention, au moins une partie de l'un parmi les connecteurs hydraulique 12 et électrique 14 est au moins partiellement agencée latéralement entre les deux voies longitudinales d'acheminement de l'autre parmi les connecteurs hydraulique 12 et électrique 14.

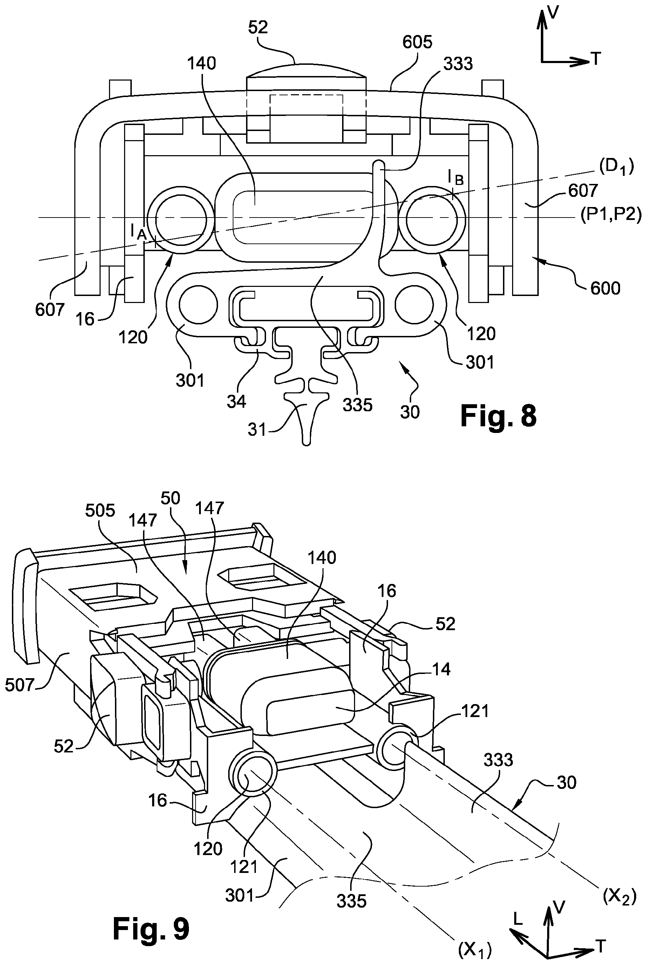

Ici, le connecteur électrique 14 est au moins partiellement agencé latéralement entre les deux conduits d'acheminement 120 du connecteur hydraulique 12. Par agencé « latéralement entre» on entend qu'il existe, lorsque le module de connexion 10 est assemblé au reste du dispositif d'essuyage 1, au moins une droite Di, illustrée aux figures 8, 11, 12 et 13, de sorte que de manière cumulative :
- la droite D₁ est orthogonale ou sensiblement orthogonale à l'axe principal d'extension (X₁, X₂) de l'un des conduits d'acheminements 120 du connecteur hydraulique 12,
- la droite D₁ traverse l'un des conduits d'acheminement 120 en un premier point d'intersection I_{A} et l'autre des conduits d'acheminement 120 en un deuxième point d'intersection I_{B} et
- la droite D₁ traverse au moins une partie du connecteur électrique 14, ladite partie du connecteur électrique 14 traversée par la droite D₁ se trouvant entre le premier point d'intersection I_{A} et le deuxième point d'intersection I_{B}.

Dans la suite, on définit un plan P₁ de sorte que les axes principaux d'extension (X₁, X₂) des conduits d'acheminement 120 du connecteur hydraulique 12 sont tous deux confondus avec le plan P₁ au moins sur une partie de leurs longueurs. En particulier ici, les axes principaux d'extension (X₁, X₂) des conduits d'acheminement 120 du connecteur hydraulique 12 sont confondus avec le plan P₁ entre l'extrémité d'entrée 121 et le coude 123 de chacun des conduits d'acheminement 120.

Dans la suite, on définit en outre un plan P₂ de sorte que les axes principaux d'extension (Y₁, Y₂) des voies longitudinales d'acheminement du connecteur électrique 14 sont sensiblement confondus avec le plan P₂ au moins sur une partie de leurs longueurs. En particulier ici, les axes principaux d'extension (Y₁, Y₂) des voies longitudinales d'acheminement du connecteur électrique 14 sont confondus avec le plan P₂ sur toutes leurs longueurs.

Dans le mode de réalisation décrit jusque là et illustré aux figures 3 à 7, qui constitue un premier mode de réalisation, les connecteurs hydraulique 12 et électrique 14 sont agencés de sorte que les plans P₁ et P₂ sont légèrement inclinés l'un par rapport à l'autre. Notamment, les plans P₁ et P₂ se coupent de sorte que l'intersection entre les deux plans P₁ et P₂ consiste en une droite perpendiculaire ou sensiblement perpendiculaire aux axes principaux d'extension (X₁, X₂) des conduits d'acheminement 120 du connecteur hydraulique 12. Ici, on note que le plan P₁ est parallèle à un plan confondu avec les axes L et T.

Dans un deuxième mode de réalisation, illustré à la figure 8, à la différence du mode de réalisation précédent, les connecteurs hydraulique 12 et électrique 14 sont agencés l'un par rapport à l'autre de sorte que les plans P₁ et P₂ sont confondus l'un avec l'autre. On note qu'ici les plans P₁ et P₂ sont parallèles à un plan confondu avec les axes L et T.

Dans un troisième mode de réalisation, illustré aux figure 9, 10 et 11, les connecteurs hydraulique 12 et électrique 14 sont agencés de sorte que les plans P₁ et P₂ sont parallèles ou sensiblement parallèles l'un à l'autre. Ici, les plans P₁ et P₂ ne sont pas confondus l'un avec l'autre. En outre, les axes principaux d'extension (Y₁, Y₂) des voies longitudinales d'acheminement du connecteur électrique 14 s'étendent longitudinalement selon une direction parallèle aux conduits d'acheminement 120 du connecteur hydraulique 12. On note qu'ici les plans P₁ et P₂ sont parallèles à un plan confondu avec les axes L et T.

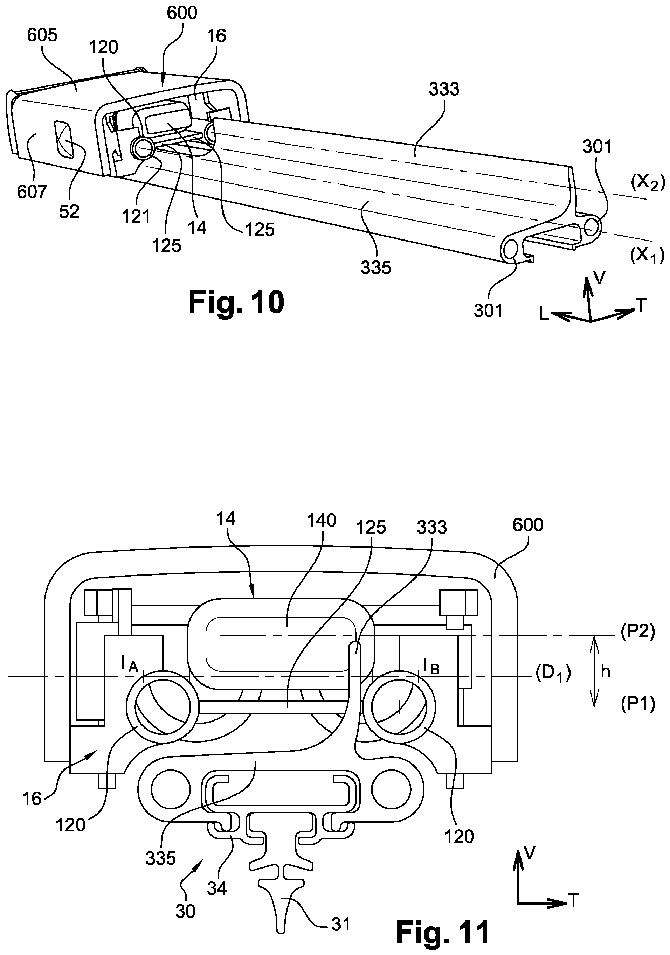

Comme cela est visible en particulier à la figure 11, on note de plus que la distance h qui sépare les plans P₁ et P₂ est inférieure à un rayon des conduits d'acheminement 120 du connecteur hydraulique 12.

Ici, le pont de matière 125 du connecteur hydraulique 12 est entièrement plan. Le pont de matière 125 s'étend ici entre les deux conduits d'acheminement 120 de manière entièrement parallèle au plan P₁. En particulier ici, le plan P₁ est confondu avec le pont de matière 125. Autrement dit, le pont de matière 125 s'étend sensiblement selon le plan P₁. On note qu'ici, le pont de matière 125 s'étend parallèlement à un plan confondu avec les axes L et T.

On note également que dans le troisième mode de réalisation, l'adaptateur 50 comprend non pas un mais deux boutons de blocage 52 destinés à coopérer mécaniquement avec la chape de connexion 600 du bras d'entraînement 60. Les boutons de blocage 52 sont ici disposés sur l'une et l'autre des parois latérales 507 de l'adaptateur 50. Ils sont conçus pour coopérer mécaniquement avec des orifices de blocage agencés cette fois sur les parois latérales 607 de la chape de connexion 600.

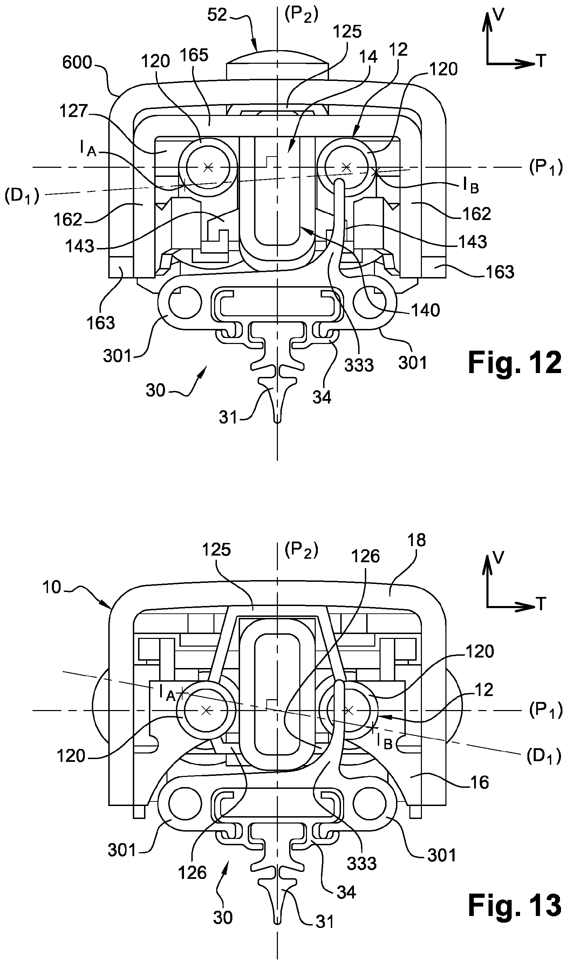

Dans un quatrième mode de réalisation illustré à la figure 12, les connecteurs hydraulique 12 et électrique 14 sont agencés de sorte que les plans P₁ et P₂ sont perpendiculaires l'un à l'autre. On note qu'ici le plan P₁ est parallèle à un plan confondu avec les axes L et T. Le plan P₂ est lui parallèle à un plan confondu avec les axes L et V. Ici, l'adaptateur 50 comprend un unique bouton de blocage 52 qui est agencé au niveau de la partie plane supérieure 505 de l'adaptateur 50. Le bouton de blocage 52 coopère mécaniquement avec la partie plane 607 de la chape de connexion 600.

Ici, le pont de matière 125 du connecteur hydraulique 12 présente sensiblement la forme d'un U dont les branches s'écarteraient légèrement l'une de l'autre. En particulier, le pont de matière 125 est conçu de manière à enjamber le connecteur électrique 14. Cette conception permet au connecteur hydraulique 12 de faire notamment fonction de logement au connecteur électrique 14 de sorte que celui-ci est agencé entre les conduits d'acheminement 120 du connecteur hydraulique 12.

On note que le corps isolant 140 du connecteur électrique 14 est muni de moyens d'accrochage 143 conçus pour coopérer mécaniquement avec le reste du module de connexion 10.

Dans un cinquième mode de réalisation illustré à la figure 13, le connecteur hydraulique 12 est lui muni de deux moyens d'accrochage 126 destinés à coopérer mécaniquement avec le connecteur électrique 14. En particulier, chaque conduit d'acheminement 120 du connecteur hydraulique 12 est muni de l'un des moyens d'accrochage 126 du connecteur hydraulique 12. On note qu'ici le plan P₁ est parallèle à un plan confondu avec les axes L et T. Le plan P₂ est lui parallèle à un plan confondu avec les axes L et V.

Dans un mode de réalisation non illustré, en variante, le connecteur hydraulique est au moins partiellement agencé latéralement entre les deux voies longitudinales d'acheminement du connecteur électrique. Le connecteur électrique est alors par exemple scindé en deux parties notamment reliées l'une à l'autre par un pont de matière.

## Revendications

1. Module de connexion (10) pour un dispositif d'essuyage (1) d'une surface extérieure (20) d'une vitre (2) d'un véhicule automobile destiné à être agencé entre un balai d'essuie-glace (30) et un bras d'entraînement (60), le module de connexion (10) comprenant un connecteur hydraulique (12) et un connecteur électrique (14), le connecteur électrique (14), dit premier connecteur, comprenant un corps isolant percé de deux conduits longitudinaux et deux broches mâles, chacun des deux conduits longitudinaux du connecteur électrique (14) et la broche mâle (147) qui le prolonge, forment ensemble une voie longitudinale d'acheminement du connecteur électrique ; le connecteur hydraulique (12), dit deuxième connecteur, comprenant deux voies longitudinales d'acheminement hydrauliques (120), le module de connexion (10) étant **caractérisé en ce que** le premier connecteur est au moins partiellement agencé latéralement entre les deux voies longitudinales d'acheminement du deuxième connecteur, et **en ce que** les voies longitudinales d'acheminement électriques et hydrauliques (120) des premier et deuxième connecteurs s'étendent chacune longitudinalement selon un axe principal d'extension.

2. Module de connexion (10) selon la revendication précédente **caractérisé en ce que** les voies longitudinales d'acheminement du premier connecteur sont au moins partiellement agencées latéralement entre les deux voies longitudinales d'acheminement du deuxième connecteur.

3. Module de connexion (10) selon l'une quelconque des revendications précédentes **caractérisé en ce que** les deux voies longitudinales d'acheminement du deuxième connecteur s'étendent sensiblement parallèlement l'une à l'autre.

4. Module de connexion (10) selon la revendication précédente **caractérisé en ce que** les voies longitudinales d'acheminement du premier connecteur sont entièrement agencées latéralement entre les deux voies longitudinales d'acheminement du deuxième connecteur.

5. Module de connexion (10) selon l'une quelconque des revendications précédentes, dans lequel les deux voies longitudinales d'acheminement du premier connecteur sont parallèles l'une à l'autre.

6. Module de connexion (10) selon l'une quelconque des revendications précédentes **caractérisé en ce que**, l'axe principal d'extension de chacune des voies longitudinales d'acheminement du premier connecteur étant sur au moins une partie de sa longueur confondu ou sensiblement confondu avec un plan P₁, les axes principaux d'extension des voies longitudinales d'acheminement du deuxième connecteur étant au moins sur une partie de leurs longueurs confondus ou sensiblement confondus avec un plan P₂.

7. Module de connexion (10) selon la revendication précédente **caractérisé en ce que** les plans P₁ et P₂ sont orthogonaux.

8. Module de connexion (10) selon la revendication 6 **caractérisé en ce que** les plans P₁ et P₂ sont parallèles.

9. Module de connexion (10) selon la revendication 6 **caractérisé en ce que** les plans P₁ et P₂ sont sensiblement confondus.

10. Balai d'essuie-glace constitué d'une lame d'essuyage (31) et d'une armature (34) **caractérisé en ce qu'**il comprend un module de connexion (10) selon l'une quelconque des revendications précédentes.

## Patentansprüche

1. Anschlussmodul (10) für eine Wischvorrichtung (1) einer Außenfläche (20) einer Glasscheibe (2) eines Kraftfahrzeugs, welches dazu bestimmt ist, zwischen einem Scheibenwischerblatt (30) und einem Antriebsarm (60) angeordnet zu sein, wobei das Anschlussmodul (10) einen hydraulischen Anschluss (12) und einen elektrischen Anschluss (14) umfasst, wobei der elektrische Anschluss (14), der als erster Anschluss bezeichnet wird, einen Isolierkörper umfasst, der mit zwei Längsleitungen und zwei Steckerstiften durchbohrt ist, wobei jede der beiden Längsleitungen des elektrischen Anschlusses (14) und der Steckerstift (147), der sie verlängert, gemeinsam einen Längsweg zur Versorgung des elektrischen Anschlusses bilden; wobei der hydraulische Anschluss (12), der als zweiter Anschluss bezeichnet wird, zwei Längswege zur hydraulischen Versorgung (120) umfasst, wobei das Anschlussmodul (10) **dadurch gekennzeichnet ist, dass** der erste Anschluss mindestens teilweise lateral zwischen den beiden Längsversorgungswegen des zweiten Anschlusses angeordnet ist, und dadurch, dass sich die Längswege zur elektrischen und hydraulischen Versorgung (120) des ersten und zweiten Anschlusses jeweils in Längsrichtung in einer Hauptausdehnungsachse erstrecken.

2. Anschlussmodul (10) nach dem vorhergehenden Anspruch, **dadurch gekennzeichnet, dass** die Längsversorgungswege des ersten Anschlusses mindestens teilweise lateral zwischen den beiden Längsversorgungswegen des zweiten Anschlusses angeordnet sind.

3. Anschlussmodul (10) nach einem der vorhergehenden Ansprüche, **dadurch gekennzeichnet, dass** sich die beiden Längsversorgungswege des zweiten Anschlusses im Wesentlichen parallel zueinander erstrecken.

4. Anschlussmodul (10) nach dem vorhergehenden Anspruch, **dadurch gekennzeichnet, dass** die Längsversorgungswege des ersten Anschlusses zur Gänze lateral zwischen den beiden Längsversorgungswegen des zweiten Anschlusses angeordnet sind.

5. Anschlussmodul (10) nach einem der vorhergehenden Ansprüche, wobei die beiden Längsversorgungswege des ersten Anschlusses im Wesentlichen parallel zueinander sind.

6. Anschlussmodul (10) nach einem der vorhergehenden Ansprüche, **dadurch gekennzeichnet, dass** die Hauptausdehnungsachse jedes der Längsversorgungswege des ersten Anschlusses auf mindestens einem Teil ihrer Länge mit einer Ebene P₁ zusammenfällt oder im Wesentlichen zusammenfällt, wobei die Hauptausdehnungsachsen der Längsversorgungswege des zweiten Anschlusses mindestens auf einem Teil ihrer Länge mit einer Ebene P₂ zusammenfallen oder im Wesentlichen zusammenfallen.

7. Anschlussmodul (10) nach dem vorhergehenden Anspruch, **dadurch gekennzeichnet, dass** die Ebenen P₁ und P₂ orthogonal sind.

8. Anschlussmodul (10) nach Anspruch 6, **dadurch gekennzeichnet, dass** die Ebenen P₁ und P₂ parallel sind.

9. Anschlussmodul (10) nach Anspruch 6, **dadurch gekennzeichnet, dass** die Ebenen P₁ und P₂ im Wesentlichen zusammenfallen.

10. Scheibenwischer, welcher aus einer Wischlamelle (31) und einer Armatur (34) besteht, **dadurch gekennzeichnet, dass** er ein Anschlussmodul (10) nach einem der vorhergehenden Ansprüche umfasst.

## Claims

1. Connection module (10) for a wiper device (1) of an outer surface (20) of a window (2) of a motor vehicle intended to be arranged between a windscreen wiper (30) and a driving arm (60), the connection module (10) comprising a hydraulic connector (12) and an electrical connector (14), the electrical connector (14), called first connector, comprising an insulating body pierced by two longitudinal ducts and two male pins, each of the two longitudinal ducts of the electrical connector (14) and the male pin (147) which prolongs it, form together a longitudinal routing channel of the electrical connector, the hydraulic connector (12), called second connector, comprising two longitudinal hydraulic routing channels (120), the connection module (10) being **characterized in that** the first connector is at least partially arranged laterally between the two longitudinal routing channels of the second connector, and **in that** the longitudinal electrical and hydraulic routing channels of the first and second connectors each extend longitudinally along a main extension axis .

2. Connection module (10) according to the preceding claim, **characterized in that** the longitudinal routing channels of the first connector are at least partially arranged laterally between the two longitudinal routing channels of the second connector.

3. Connection module (10) according to either one of the preceding claims, **characterized in that** the two longitudinal routing channels of the second connector extend substantially parallel to one another.

4. Connection module (10) according to the preceding claim, **characterized in that** the longitudinal routing channels of the first connector are entirely arranged laterally between the two longitudinal routing channels of the second connector.

5. Connection module (10) according to any one of the preceding claims, in which the two longitudinal routing channels of the first connector are parallel to one another.

6. Connection module (10) according to any one of the preceding claims, **characterized in that** the main extension axis of each of the longitudinal routing channels of the first connector, over at least a part of its length, coinciding or substantially coinciding with a plane P₁, the main extension axes of the longitudinal routing channels of the second connector, at least over a part of their lengths, coinciding or substantially coinciding with a plane P₂.

7. Connection module (10) according to the preceding claim, **characterized in that** the planes P₁ and P₂ are orthogonal.

8. Connection module (10) according to Claim 6, **characterized in that** the planes P₁ and P₂ are parallel.

9. Connection module (10) according to Claim 6, **characterized in that** the planes P₁ and P₂ substantially coincide.

10. Windscreen wiper consisting of a wiper blade (31) and a reinforcement (34), **characterized in that** it comprises a connection module (10) according to any one of the preceding claims.
